Europäisches Patentamt

European Patent Office

Office européen des brevets

(19)

(11) Numéro de publication : **0 336 468 B1**

# (12) FASCICULE DE BREVET EUROPEEN

(45) Date de publication du fascicule du brevet :
**04.03.92 Bulletin 92/10**

(51) Int. CI.$^5$ : **C08G 61/12, H01B 1/12**

(21) Numéro de dépôt : **89200586.9**

(22) Date de dépôt : **09.03.89**

---

(54) **Procédé de préparation d'un latex à base de polypyrrole et utilisation de ce latex pour former un film conducteur.**

---

(30) Priorité : **21.03.88 FR 8803778**

(43) Date de publication de la demande :
**11.10.89 Bulletin 89/41**

(45) Mention de la délivrance du brevet :
**04.03.92 Bulletin 92/10**

(84) Etats contractants désignés :
**AT BE CH DE ES FR GB IT LI NL SE**

(56) Documents cités :
**EP-A- 0 229 992**
**DE-A- 3 318 856**
**GB-A- 2 181 367**
**JOURNAL OF COLLOID AND INTERFACE SCIENCE, vol. 118, no. 2, aout 1987, Academic Press, Inc.; S.P. ARMES et al.:"Aqueous dispersions of electrically conducting monodisperse polypyrrole particles", page 411**

(56) Documents cités :
**MAKROMOLEKULARE CHEMIE, RAPID COMMUNICATIONS, vol. r, no. 3, mars 1984, pages 157-164, Heidelberg, DE; W.WERNET et al.:"A new series of conducting polymers with layered structure: polypyrrole n-alkylsulfates and n-alkylsulfonates"**

(73) Titulaire : **SOLVAY**
**Rue du Prince Albert, 33**
**B-1050 Bruxelles (BE)**

(72) Inventeur : **Destryker, Elise**
**Jasmijnlaan, 11**
**B-1600 Sint-Pieters-Leeuw (BE)**
Inventeur : **Hannecart, Etienne**
**Arboretumlaan, 38**
**B-1980 Tervueren (BE)**

(74) Mandataire : **Nichels, William et al**
**Solvay Département de la Propriété Industrielle Rue de Ransbeek, 310**
**B-1120 Bruxelles (BE)**

---

## Description

L'invention concerne un procédé de préparation d'un latex à base de polypyrrole, à partir duquel il est possible d'obtenir des films homogènes, adhérents, dans une large gamme d'épaisseur et ayant une conductivité élevée.

On a déjà proposé dans la demande de brevet GB-2181367 de préparer des films conducteurs à base de pyrrole en polymérisant dans un milieu aqueux du pyrrole en présence d'un alcool polyvinylique et d'une substance capable d'apporter la propriété de conductivité, telle qu'un composé ferrique ou un persulfate.

De même, on a proposé dans le document - Journal of Colloid and Interface Science, Vol. 118, N.2, August 1987, p. 410-416 - de préparer un latex stable dans l'eau à base de polypyrrole en mettant en oeuvre une technique de polymérisation du pyrrole qui fait intervenir le chlorure ferrique comme initiateur et un acétate de polyvinyle partiellement hydrolysé comme stabilisant.

Cependant, ces procédés conduisent à des polymères ayant une conductivité peu élevée. Les films obtenus avec ces polymères sont généralement peu homogènes ou ont une adhérence faible sur les métaux, les verres et les verres métallisés.

La présente invention vise à fournir un procédé qui ne présente plus ces inconvénients.

L'invention concerne à cet effet un procédé de préparation d'un latex à base de polymères de pyrrole ou d'un dérivé de pyrrole dans un milieu réactionnel aqueux comprenant un sel ferrique, un alcool polyvinylique ou un dérivé de cet alcool et un agent codispersant choisi parmi des sulfonates ou des sulfates d'alkyles ou d'aryles, des acides tels que l'acide benzoïque, des sels d'ammonium ou des sels alcalins tels que le laurate, le trichloroacétate, le phénylphosphonate, le glycérol-2-phosphate d'ammonium ou de sodium.

Par agent codispersant, on entend des composés organiques susceptibles de donner des anions. Parmi ceux-ci, on préfère les composés organiques réagissant avec le sel ferrique présent dans le milieu réactionnel ou ayant déjà réagi avec un sel ferrique avant l'introduction dans le mélange réactionnel. Généralement, on met en oeuvre des sulfonates ou des sulfates d'alkyles ou d'aryles, des acides tels que l'acide benzoïque, des sels d'ammonium ou des sels alcalins tels que le laurate, le trichloroacétate, le phénylphosphonate, le glycérol-2-phosphate d'ammonium ou de sodium.

Habituellement, on met en oeuvre des composés choisis parmi :
– les acides benzoïque, para et métahydroxybenzoïque, trifluorométhanesulfonique, benzènesulfonique, tosylique, dodécylbenzènesulfonique;
– les sels tels que les sels de sodium des acides trifluorométhanesulfonique, laurique, trichloroacétique, phénylphosphonique, glycérol-2-phosphonique, octylsulfonique, pentadécylsulfonique, hexadécylsulfonique, polyvinylsulfonique, polystyrènesulfonique, tosylique, dodécylbenzènesulfonique, parahydroxybenzènesulfonique, 4-diméthylaminobenzènesulfonique, 1,3-benzènedisulfonique, dodécylsulfurique.

De manière préférée, on met en oeuvre des composés comportant un groupement dodécylsulfate. De manière particulièrement préférée, on met oeuvre le dodécylsulfate de sodium.

Dans le milieu réactionnel, on met également en oeuvre comme agent dispersant un alcool polyvinylique ou un dérivé de cet alcool, tel que notamment un acétate. Habituellement, on met en oeuvre un acétate de polyvinyle hydrolysé et de manière préférée un acétate de polyvinyle hydrolysé ayant un taux d'hydrolyse compris entre 72 et 96 % et un poids moléculaire moyen compris entre 50.000 et 200.000. De bons résultats ont été obtenus avec un acétate de polyvinyle hydrolysé ayant un taux d'hydrolyse compris entre 86 et 90 % et un poids moléculaire moyen compris entre 100.000 et 140.000.

Dans le milieu réactionnel, on met également en oeuvre un sel ferrique comme agent oxydant et dopant, provoquant la polymérisation. Généralement, on met en oeuvre un sel ferrique organique ou inorganique. Habituellement, on met en oeuvre comme sel ferrique inorganique un chlorure, un sulfate ou un nitrate et comme sel ferrique organique des composés du type : trichloroacétate de fer, phénylphosphonate de fer, glycérol-2-phosphate de fer, pentadécylsulfonate de fer, hexadécylsulfonate de fer, polyvinylsulfonate de fer, polystyrènesulfonate de fer, dodécylbenzènesulfonate de fer, tosylate de fer, trifluorométhanesulfonate de fer, dodécylsulfate de fer. De manière préférée, on met en oeuvre le chlorure ferrique.

Enfin, le milieu réactionnel contient un dérivé de pyrrole par lequel on entend le pyrrole, le N-méthylpyrrole, les pyrroles substitués en 3 et les mélanges de ces composés. De préférence, on met en oeuvre le pyrrole non substitué.

La quantité d'agent codispersant mise en oeuvre dans le procédé selon l'invention peut varier suivant sa nature chimique.

Lorsqu'on travaille avec le dodécylsulfate de sodium, on met généralement en oeuvre 0,01 à 7,5 moles par mole de pyrrole monomère, habituellement 0,05 à 3 moles et de manière préférée 0,1 à 2 moles. De bons résultats ont été obtenus avec des concentrations comprises entre 0,3 et 1 mole de dodécylsulfate de sodium par mole de pyrrole monomère.

La quantité d'alcool polyvinylique ou de dérivé de cet alcool mise en oeuvre peut varier entre de larges limites et dépend de sa solubilité dans l'eau. Lorsqu'on travaille avec un acétate de polyvinyle hydrolysé, on met généralement en oeuvre 0,1 à 8 g par g de pyrrole monomère, habituellement 0,2 à 5 g. De bons résultats ont été obtenus avec des concentrations comprises entre 0,3 et 2 g d'acétate de polyvinyle hydrolysé par g de pyrrole monomère.

Pour que le procédé présente un bon rendement, la quantité de sel ferrique à mettre en oeuvre est importante. Lorsqu'on travaille avec les chlorure ferrique, on met généralement en oeuvre 0,3 à 3 moles de chlorure ferrique par mole de pyrrole. De bons résultats ont été obtenus avec des concentrations comprises entre 2 et 2,7 moles de chlorure ferrique par mole de pyrrole.

Le procédé selon l'invention s'opère de préférence en milieu aqueux mais la quantité d'eau nécessaire peut varier entre de larges limites et dépend essentiellement des autres composants.

Le procédé selon l'invention peut avantageusement être réalisé en suivant les étapes suivantes :
– lors d'une première étape, on introduit dans le réacteur l'eau, le sel ferrique, l'alcool polyvinylique ou le dérivé de cet alcool et l'agent codispersant pour former le milieu réactionnel;
– lors d'une deuxième étape, on ajoute à ce milieu réactionnel sous agitation le pyrrole ou le dérivé du pyrrole en présence d'eau.

Le latex finalement obtenu après ces deux étapes est concentré par centrifugation, ultrafiltration ou par toute méthode connue. Puis il est lavé avec de l'eau. Le latex concentré et lavé est ensuite redispersé dans une solution aqueuse d'alcool polyvinylique ou d'un dérivé de cet alcool. Cette solution aqueuse contient habituellement de 0,1 à 50 g d'alcool polyvinylique ou de dérivé de cet alcool par 100 ml d'eau et de préférence de 0,5 à 10 g. Généralement, on met en oeuvre le composé chimique déjà utilisé lors de la première étape.

La température à laquelle est réalisé le procédé est généralement comprise entre 0 et 50°C et de préférence entre 5 et 40°C, lorsqu'on opère à pression atmosphérique.

La pression à laquelle est réalisé le procédé, n'est pas critique en soi. Elle est généralement comprise entre 0,1 et 10 bar et de préférence elle est égale à la pression atmosphérique.

Le procédé selon l'invention peut être réalisé dans tout appareillage ou tout réacteur permettant de réunir les conditions opératoires décrites ci-avant.

La présente invention concerne aussi l'utilisation du latex obtenu pour former un film conducteur. En effet, le procédé selon l'invention permet d'obtenir des latex, formés de polymères conducteurs, stables, pouvant former des films dans une large gamme d'épaisseur, adhérents, homogènes et très conducteurs.

Les films obtenus sont homogènes et, de ce fait, ne se laminent pas spontanément. Il est donc possible d'obtenir des couches très minces, telles que notamment des couches submicroniques, des films de 0,2 à quelques dizaines de microns, mais également des couches de plusieurs centaines de microns.

Les polymères conducteurs obtenus peuvent notamment être utilisés comme matériaux d'électrodes actives ou passives, agent liant dans les électrodes, blindage électromagnétique, composants de batteries, d'accumulateurs ou de capacités, dispositifs électrochimiques et électrochromiques, peintures, pour absorption électromagnétique, et également, selon l'épaisseur des films obtenus, pour l'affichage, pour l'enregistrement de données et comme matériaux pour composants et circuits électroniques.

Les latex obtenus selon l'invention peuvent être déposés sur tout support, tel que notamment le verre, les métaux, les verres métallisés, les fibres de verre, les textiles, les matières plastiques.

L'invention est illustrée par les exemples suivants.

Exemples 1R, 2R, 3R et 4R de comparaison

Dans un ballon de 500 ml, on introduit 150 ml d'eau, du chlorure ferrique ($FeCl_3.6 H_2O$) et de l'acétate de polyvinyle hydrolysé à 88 % et de poids moléculaire moyen 120.000; les quantités de ces produits sont notées dans le tableau 1.

A ce milieu réactionnel ainsi obtenu, on ajoute, goutte à goutte, sous agitation, le pyrrole dissous dans 50 ml d'eau.

Le ballon est maintenu 2 heures à 20°C. Le produit obtenu est étalé sur du verre métallisé (verre ITO) et sur du nickel, puis séché à température ambiante une nuit.

Après ce séchage, le film obtenu est lavé à l'éthanol une ou plusieurs fois jusqu'à ce que l'éthanol soit clair.

Les caractéristiques des films obtenus sont rassemblées au tableau 1 : les films obtenus sont peu homogènes, ont une adhérence faible et leur conductivité est peu élevée.

Tableau 1

| N° exemples | Produits mis en oeuvre | | | Caractéristiques des films obtenus | | | | |
| | FeCl$_3$.6H$_2$O (g) | Acétate de polyvinyle hydrolysé (g) | Pyrrole (g) | Homogénéité | Adhérence (*) | | Epaisseur obtenue après 1 seul étale- ment (μm) | Conducti- vité (S.cm$^{-1}$) |
| | | | | | sur verre ITO | sur nickel | | |
| 1R | 29,7 | 1 | 3 | très faible | 2A | 2A | 50 | $10^{-2}$ à 1 |
| 2R | 17,2 | 1,2 | 1,6 | très faible | 2A | 2A | 6 | 0,3 |
| 3R | 32,1 | 2,25 | 3 | faible | 2A | 2A | 75 | $10^{-1}$ |
| 4R | 95,1 | 6,75 | 9 | faible | 2A | 2A | 100 | $3.10^{-3}$ |

(*) L'adhérence est mesurée suivant la norme ASTM D 3359-78A qui met en oeuvre un test au Scotch tape 3M n° 710 (American National Standard).

EP 0 336 468 B1

Exemples 5R et 6R de comparaison

Dans un ballon de 500 ml, on introduit 150 ml d'eau, 29,7 g de chlorure ferrique $FeCl_3.6\,H_2O$ et 1 g d'acétate de polyvinyle hydrolysé à 88 % et de poids moléculaire moyen 120.000, puis on ajoute, goutte à goutte, sous agitation, 3 g de pyrrole dissous dans 50 ml d'eau.

Le ballon est maintenu 2 heures à 20°C.

Le produit obtenu est centrifugé pendant 30 minutes à 15.000 t/min. et lavé deux fois avec de l'eau.

Puis, il est dispersé

. soit dans une solution de 2 g d'acétate de polyvinyle hydrolysé à 88 % dans 100 ml d'eau (ex. 5R);

. soit dans une solution de 5,6 g d'acétate de polyvinyle hydrolysé à 88 % dans 200 ml d'eau (ex. 6R).

Le produit obtenu est étalé sur du verre métallisé (verre ITO) et sur du nickel, puis séché à température ambiante une nuit.

Les caractéristiques des films obtenus sont rassemblées au tableau 2.

Les films obtenus présentent une conductivité faible.

Tableau 2

| N° exemples | Homogénéité | Adhérence (*) | | Epaisseur obtenue après 1 seul étalement (µm) | Conductivité (S.cm$^{-1}$) |
|---|---|---|---|---|---|
| | | sur verre ITO | sur nickel | | |
| 5R | bonne | 4A | 4A | 50-100 | 0,09 |
| 6R | bonne | 4A | 4A | 80 | $10^{-4}$ |

(*) L'adhérence est mesurée suivant la norme ASTM D 3359-78A qui met en oeuvre un test au Scotch tape 3M n° 710 (American National Standard).

Exemples 7 et 8

Dans un ballon de 500 ml, on introduit 150 ml d'eau, 29,7 g de chlorure ferrique $FeCl_3.6 H_2O$, 4 g d'acétate de polyvinyle hydrolysé à 88 % et de poids moléculaire moyen 120.000 et 6,3 g de dodécylsulfate de sodium.

Puis, on ajoute, goutte à goutte, sous agitation, 3 g de pyrrole dissous dans 50 ml d'eau.

Le ballon est maintenu 2 heures à 20°C.

Le latex obtenu est centrifugé pendant 30 minutes à 15.000 tours/min. et lavé deux fois avec de l'eau.

Puis, il est dispersé dans une solution de 2 g d'acétate de polyvinyle hydrolysé à 88 % dans 100 ml d'eau, pour l'exemple 7, et de 2 g d'acétate de polyvinyle hydrolysé à 88 % dans 300 ml d'eau pour l'exemple 8.

Le latex obtenu est étalé sur du verre métallisé (verre ITO) et sur du nickel, puis séché à température ambiante une nuit.

Les caractéristiques des films obtenus sont rassemblées au tableau 3 : les films obtenus ont une conductivité élevée et une bonne adhérence.

Tableau 3

| N° exemples | Homogénéité | Adhérence (*) | | Epaisseur obtenue après 1 seul étale-ment (µm) | Conductivité (S.cm⁻¹) |
|---|---|---|---|---|---|
| | | sur verre ITO | sur nickel | | |
| 7 | bonne | 4A | 4A | 50-100 | 10 |
| 8 | bonne | 4A | 4A | 10 | 12 |

(*)  L'adhérence est mesurée suivant la norme ASTM D 3359-78A qui met en oeuvre un test au Scotch tape 3M n° 710 (American National Standard).

EP 0 336 468 B1

## Revendications

1. Procédé de préparation d'un latex à base de polymères de pyrrole ou d'un dérivé de pyrrole dans un milieu réactionnel aqueux comprenant un sel ferrique et un alcool polyvinylique ou un dérivé de cet alcool, caractérisé en ce que le milieu réactionnel comprend en outre un agent codispersant choisi parmi des sulfonates ou des sulfates d'alkyles ou d'aryles, des acides tels que l'acide benzoïque, des sels d'ammonium ou des sels alcalins tels que le laurate, le trichloroacétate, le phénylphosphonate, le glycérol-2-phosphate d'ammonium ou de sodium.

2. Procédé selon la revendication 1, caractérisé en ce que l'agent codispersant comporte un groupement dodécylsulfate.

3. Procédé selon la revendication 2, caractérisé en ce que l'agent codispersant mis en oeuvre est le dodécylsulfate de sodium.

4. Procédé selon la revendication 3, caractérisé en ce que le dodécylsulfate de sodium est mis en oeuvre avec des concentrations comprises entre 0,3 et 1 mole par mole de dérivé de pyrrole.

5. Procédé selon l'une quelconque des revendications 1 à 4, caractérisé en ce que le dérivé de l'alcool polyvinylique mis en oeuvre est un acétate de polyvinyle hydrolysé.

6. Procédé selon la revendication 5, caractérisé en ce que l'acétate de polyvinyle hydrolysé est mis en oeuvre avec des concentrations comprises entre 0,1 et 8 g par g de pyrrole.

7. Procédé selon l'une quelconque des revendications 1 à 6, caractérisé en ce que le sel ferrique mis en oeuvre est le chlorure ferrique.

8. Procédé selon la revendication 7, caractérisé en ce que le chlorure ferrique est mis en oeuvre avec des concentrations comprises entre 2 et 2,7 moles par mole de pyrrole.

9. Procédé selon l'une quelconque des revendications 1 à 8, caractérisé en ce que l'on prépare le latex en deux étapes comprenant les opérations suivantes :

1) lors d'une première étape, on introduit dans le réacteur l'eau, le sel ferrique, l'alcool polyvinylique ou le dérivé de cet alcool et l'agent codispersant,

2) lors d'une deuxième étape, on ajoute au milieu réactionnel le pyrrole ou le dérivé de pyrrole en présence d'eau.

10. Procédé selon la revendication 9, caractérisé en ce que le latex obtenu est concentré, puis lavé avec de l'eau, puis redispersé dans une solution aqueuse d'alcool polyvinyllique ou de dérivé de cet alcool.

11. Utilisation du latex obtenu selon l'une quelconque des revendications précédentes pour former un film conducteur.

## Patentansprüche

1. Verfahren zur Herstellung eines Latex auf der Basis von Polymeren von Pyrrol oder eines Pyrrolderivats in einem wässrigen Reaktionsmedium, das ein Ferrisalz und einen Polyvinylalkohol oder ein Derivat dieses Alkohols umfaßt, dadurch gekennzeichnet, daß das Reaktionsmedium außerdem ein kodispergierendes Mittel, ausgewählt unter Alkyl- oder Arylsulfonaten oder -sulfaten, Säuren, wie Benzoesäure, Ammoniumsalzen oder alkalischen Salzen, wie Ammonium- oder Natrium-Laurat, Trichloracetat, Phenylphosphonat, Glyzerin-2-phosphat, umfaßt.

2. Verfahren nach Anspruch 1, dadurch gekennzeichnet, daß das kodispergierende Mittel eine Dodecylsulfat-Gruppierung umfaßt.

3. Verfahren nach Anspruch 2, dadurch gekennzeichnet, daß das eingesetzte kodispergierende Mittel das Natriumdodecylsulfat ist.

4. Verfahren nach Anspruch 3, dadurch gekennzeichnet, daß das Natriumdodecylsulfat mit Konzentrationen zwischen 0,3 und 1 Mol pro Mol Pyrrolderivat eingesetzt wird.

5. Verfahren nach einem der Ansprüche 1 bis 4, dadurch gekennzeichnet, daß das eingesetzte Polyvinylalkoholderivat ein hydrolisiertes Polyvinylacetat ist.

6. Verfahren nach Anspruch 5, dadurch gekennzeichnet, daß das hydrolisierte Polyvinylacetat mit Konzentrationen zwischen 0,1 und 8 g pro g Pyrrol eingesetzt wird.

7. Verfahren nach einem der Ansprüche 1 bis 6, dadurch gekennzeichnet, daß das eingesetzte Ferrisalz Ferrichlorid ist.

8. Verfahren nach Anspruch 7, dadurch gekennzeichnet, daß das Ferrichlorid mit Konzentrationen zwischen 2 und 2,7 Mol pro Mol Pyrrol eingesetzt wird.

9. Verfahren nach einem der Ansprüche I bis 8, dadurch gekennzeichnet, daß man den Latex in zwei Stufen, die folgende Vorgehensweisen umfassen, herstellt:

1) bei einer ersten Stufe führt man in das Reaktionsgefäß das Wasser, das Ferrisalz, den Polyvinylalkohol oder das Derivat dieses Alkohol und das kodispergierende Mittel ein,

2) bei einer zweiten Stufe fügt man dem Reaktionsmedium das Pyrrol oder das Pyrrolderivat in Anwesenheit von Wasser zu.

10. Verfahren nach Anspruch 9, dadurch gekennzeichnet, daß der erhaltene Latex konzentriert, dann mit Wasser gewaschen, dann in einer wässrigen Lösung von Polyvinylalkohol oder dem Derivat dieses Alkohols redispergiert wird.

11. Verwendung des erhaltenen Latex nach einem der vorhergehenden Ansprüche zur Bildung eines leitfähigen Films.

## Claims

1. Process for preparing a latex based on polymers of pyrrole or of a pyrrole derivative in an aqueous reaction medium comprising a ferric salt and a polyvinyl alcohol or a derivative of this alcohol, characterized in that the reaction medium comprises, in addition, a codispersant agent chosen from alkyl or aryl sulphonates or sulphates, acids such as benzoic acid, and ammonium salts or alkali metal salts such as ammonium or sodium laurate, trichloroacetate, phenylphosphonate or (glycerol 2-phosphate).

2. Process according to Claim 1, characterized in that the codispersant agent contains a dodecyl sulphate group.

3. Process according to Claim 2, characterized in that the codispersant agent employed is sodium dodecyl sulphate.

4. Process according to Claim 3, characterized in that sodium dodecyl sulphate is employed at concentrations of between 0.3 and 1 mole per mole of pyrrole derivative.

5. Process according to any one of Claims 1 to 4, characterized in that the polyvinyl alcohol derivative employed is a hydrolysed polyvinyl acetate.

6. Process according to Claim 5, characterized in that the hydrolysed polyvinyl acetate is employed at concentrations of between 0.1 and 8 g per g of pyrrole.

7. Process according to any of Claims 1 to 6, characterized in that the ferric salt employed is ferric chloride.

8. Process according to Claim 7, characterized in that ferric chloride is employed at concentrations of between 2 and 2.7 moles per mole of pyrrole.

9. Process according to any one of Claims 1 to 8, characterized in that the latex is prepared in two stages, comprising the following operations:

1) in a first stage, water, the ferric salt, the polyvinyl alcohol or the derivative of this alcohol and the codispersant agent are introduced into the reactor,

2) in a second stage, pyrrole or the pyrrole derivative is added to the reaction medium in the presence of water.

10. Process according to Claim 9, characterized in that the latex obtained is concentrated, then washed with water and then redispersed in an aqueous solution of polyvinyl alcohol or of a derivative of this alcohol.

11. Use of the latex obtained according to any one of the preceding Claims to form a conducting film.